# EUROPEAN PATENT SPECIFICATION

(11) **EP 3 030 437 B1**
(45) Date of publication and mention of the grant of the patent: **16.10.2019**
(21) Application number: 14834462.5
(22) Date of filing: 06.08.2014
(51) Int. Cl.: B60H 1/34, B60H 1/00, F24F 13/14

(54) **VEHICLE AIR VENT DAMPER**
BELÜFTUNGSKLAPPENDÄMPFER FÜR EIN FAHRZEUG
VOLET D'OBTURATION D'ÉVACUATION D'AIR DE VÉHICULE

(30) Priority: 06.08.2013 KR 20130093280
(43) Date of publication of application: 15.06.2016
(73) Proprietor: Nifco Korea Inc., Cheonan-si, Chungcheongnam-do 331-200 (KR)
(72) Inventor: SHIN, Yoon Hwan, Asan-si, Chungcheongnam-do 336-871 (KR)
(74) Representative: Dr. Gassner & Partner mbB
(86) International application number: PCT/KR2014/007274
(87) International publication number: WO 2015/020429

(56) References cited:
- DE-A1- 19 757 280
- DE-A1- 19 831 670
- FR-A1- 2 707 928
- JP-A- H0 958 249
- JP-A- 2000 289 431
- KR-A- 20050 018 109
- KR-A- 20100 008 542
- KR-A- 20110 037 748

## Description

### Technical Field

The present invention relates to a vehicle air vent damper, wherein the misassembling between a blocking pad made from a rubber material and a working member is prevented and the deformation of the blocking pad is minimized, thereby achieving the smooth operation of the damper and preventing the air leakage from the inside of an air vent.

### Background Art

In general, a vehicle air vent is an air discharge means of an air conditioning system which appropriately maintains vehicle room temperature and is formed to control the air discharge by controlling a damper which is provided to the inside of an air vent.

According to a prior art vehicle air vent damper, as disclosed in Korean Patent Laid-open Publication No. 10-2005-0018109, a damper provided to the inside of an air vent can operate to open or close the air vent by the operation of a knob which is provided to the front surface of the air vent so as to be operated by a hand. A further prior art vehicle air vent damper is known from KR 2011 0037748 A.

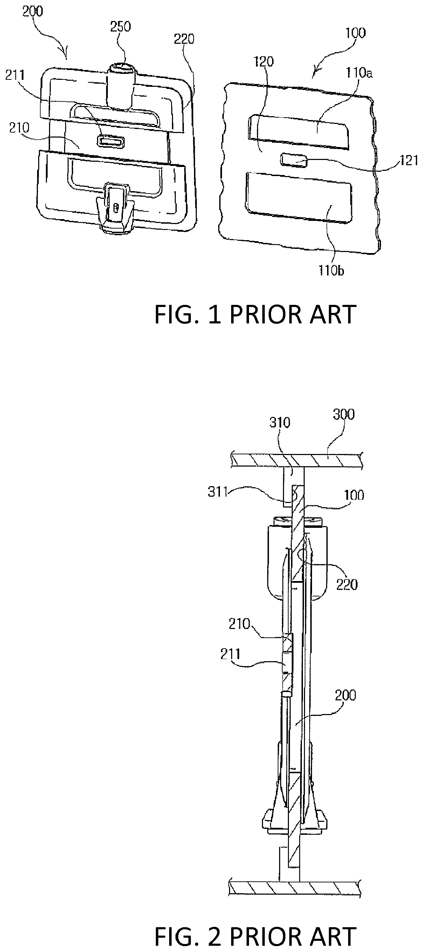

Further, referring to Figs. 1 and 2, a prior art damper includes: a blocking pad 100 made from a rubber material and having a securing part 120 formed in the traversal direction in the center thereof, a fitting hole 121 penetratingly formed in the center thereof, and coupling holes 110a, 110b respectively penetratingly formed in the upper and lower portions of the securing part 120; and
a working member 200 having a securing groove 210 formed in the traversal direction in the middle thereof such that the securing part 120 formed in the middle of the blocking pad 100 is secured thereto, a misassembling preventing rib 211 protruding forwards in the middle of the securing groove 210 so as to be inserted into the fitting hole 121 of the blocking pad 100, and coupling grooves 220 formed on an outside rim surface so as to be forcedly fitted into the coupling holes 110a, 110b in a state, in which the rib 211 is inserted into the fitting hole 121.

At this time, the working member 200 has hinge grooves 250 at the upper and lower portions of the drawings so as to be rotationally coupled to the air vent 300, and the coupling grooves 220 are oppositely formed at both sides with reference to the hinge grooves 250 for facilitating the forced-fitting operations.

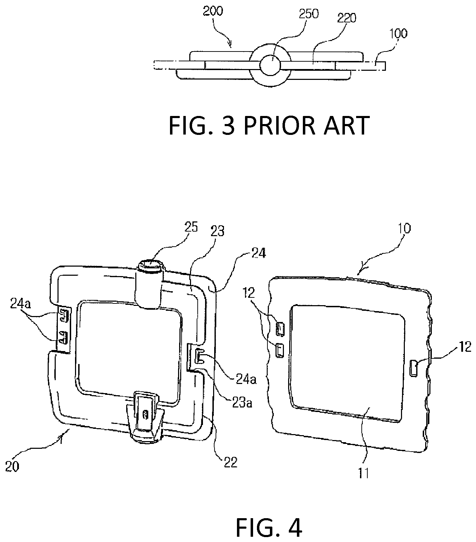

That is, as shown in Fig. 3, with reference to the hinge grooves 250 of the working member 200, the working member is formed such that the right front surface of the working member 200 is short while the right rear surface thereof has an extended length in the drawing and the left front surface of the working member 200 is long while the left rear surface thereof has an short distance. Therefore, the blocking pad 100 made from a rubber material is pulled in a state, in which the blocking pad 100 is fitted into the coupling groove 200 at one side, such that the forcedly-fitting of the blocking pad 100 into the coupling groove 200 at the other side is readily carried out.

In the prior art air vent damper described as above, in a state, in which the securing part 120 of the blocking pad 100 made from a rubber material is secured to the securing groove 210 of the working member 200 by the insertion of the misassembling preventing rib 211 into the fitting holes 121, the inside portions of the coupling holes 110a, 110b of the blocking pad 100 are inserted into the coupling grooves 220 of the working member 200, and the outside end portion of the blocking pad 100 is attached to or detached from the blocking step 311 of the blocking protrusion 310 which is provided to the air vent 300 such that the discharge mount of air which is introduced to a vehicle room through the air vent 300 can be controlled.

The prior art vehicle air vent damper has, however, a disadvantage that it is necessary to penetratingly form the fitting holes in the center portion of the securing part and to penetratingly form the coupling holes in each of the upper and lower portions of the securing part such that the manufacturing of the molds for forming the blocking pad and the working process are added, increasing the manufacturing costs.

In addition, the prior art vehicle air vent damper has, however, a disadvantage that it is necessary to form the securing groove in the center of the working member and to protrudingly form the misassembling preventing rib for preventing the misassembling of the blocking pad with respect to the securing groove such that the strength of the center portion of the working member is weakened to be likely to be deformed, decreasing the reliability of products.

### PRIOR ART DOCUMENT

### PATENT DOCUMENT

Patent Document 1: Korean Patent Laid-open Publication No. 10-2005-0018109, Air vent damper, published on 23 February 2005

### Summary of Invention

### Technical Problem

The present invention has been made so as to resolve the above-described problems, and its objective is to provide a vehicle air vent damper, wherein a blocking pad made from a rubber material can be easily and conveniently coupled to a working member simultaneously improving the strength of the working member, thereby restraining the deformation thereof.

Another objective of the present invention is to provide a vehicle air vent damper, wherein misassembling ribs and holes are asymmetrically provided to the right and left portions of a working member and a blocking pad, thereby reducing the blocking pad assembling time and work.

### Solution to Problem

The objectives of the present invention are achieved by a vehicle air vent damper according to the features of claim 1.

### Advantageous Effects of Invention

A vehicle air vent damper according to the present invention in the above configuration can simplify the assembling process by forcedly fitting the blocking pad along the outer peripheral surface of the working member and omit any additional securing groove which has been formed in the middle portion of the working member in the prior art, thereby simplifying the manufacturing of molds and working process while reducing manufacturing costs thereof.

Further, the coupling hooks provided to the both right and left sides of the working member are inserted into the coupling holes provided to the blocking pad, thereby stably coupling the blocking member to the working member without any misassembling.

Therefore, the blocking pad which is fitted into the coupling hooks is prevented from the escaping to the outside and the deformation thereof while the damper is in operation and the air leakage of the air vent can be prevented when the damper is closed.

### Brief Description of Drawings

Fig. 1 is an exploded perspective view showing the structure of a prior art vehicle air vent damper.
Fig. 2 is a side view showing the mounting state of the prior art air vent damper.
Fig. 3 is a plane view showing the working member of the prior art air vent damper.
Fig. 4 is an exploded perspective view of a vehicle air vent damper according to a preferred embodiment of the present invention.
Fig. 5 is a side view showing the mounting state of the air vent damper according to the present invention, and
Fig. 6 is a plane view showing the working member of the air vent damper according to the present invention.

### Best Mode for Carrying out the Invention

Hereinafter, embodiments of the present invention will now be described with respect to the configuration in detail with reference to the drawings.

A vehicle air vent damper according to the present invention is derived to prevent the misassembling of a blocking pad 10 made from a rubber material and a working member 20 while minimizing the deformation of the blocking pad 10 so as to enable a damper to smoothly operate and to prevent the leakage of air from the inside of an air vent.

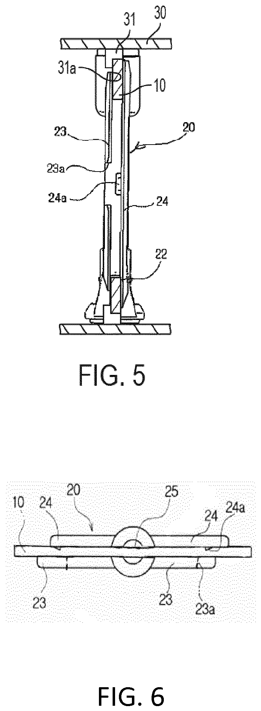

First, approximately explaining the reference of directions used in the description with reference to Fig. 4 and Fig. 5, a damper to which the technique of the present invention is applied, a blocking pad 10 forcedly fitted into the outer peripheral coupling groove 22 of a working member 20 which is rotationally hinge-coupled to the inside of an air vent 30 is held by the blocking step 31 a of a blocking protrusion 31, which is formed on the inside of the air vent, at one end such that the rotation of the blocking pad 10 is controlled and the discharge amount of air which is introduced into a vehicle room through the air vent 30 can be controlled.

Herein, the working member 20 has a coupling groove 22 formed along the outer peripheral surface thereof, a base part 24 formed to have a fixing part 23 which is short on one surface of a coupling groove 22 while the fixing part 23 extends long on the other surface of the coupling groove 22 such that the right side and the left side with reference to a hinge groove 25 are opposite to each other, and fitting grooves 23a depressed inwards on the right and left ends of the fixing part 23, and the base part 24 formed to further have coupling hooks 24a to be exposed through the fitting grooves 23a.

Further, the blocking pad 10 has a coupling hole 11 formed in the middle thereof so as to be forcedly fitted into the coupling groove 22 of the working member 20, and fitting holes 12 further formed at both right and left sides thereof so as to be fitted into the coupling hooks 24a.

The working member 20 and the blocking pad 10 are provided with the two coupling hooks 24a and the two fitting holes 12 at one side of each, and provided with one coupling hooks 24a and one fitting hole 12 at the other side of each so as to prevent the misassembling of the blocking pad 10.

According to another embodiment of the present invention for preventing the misassembling, the fitting grooves 23a and the coupling hooks 24a formed at both right and lefts sides of the working member 20 are preferably located at different horizontal positions of the right and left sides for the forcedly-fitting of the blocking pad 10.

Furthermore, the coupling hooks 24a are formed to have vertical surfaces on the insides thereof and to protrude to the outsides with an inclination such that the coupling can be readily carried out in the process of forcedly fitting the blocking pad 10 while preventing the escape of the blocking pad 10 by the holding of the coupling hooks 24a during the operation of the damper.

Now, the assembling procedure of the air vent damper configured as above will be described in more detail.

The coupling hole 11 of the blocking pad 10 is forcedly fitted into the coupling groove 22 formed along the outer peripheral surface of the working member 20.

At this time, the two coupling hooks 24a formed at one side of the working member 20 are inserted into the two fitting holes 12 formed at one side of the blocking pad 10, while the one coupling hook 24a formed at the other side of the working member 20 is inserted into the fitting hole 12 formed at the other side of the blocking pad 10, thereby preventing the misassembling of the blocking pad 10 and improving the stable coupling of the blocking pad 10.

Explaining an example of use of the working member 20 to which coupled the blocking pad 10 is coupled as above, the discharge amount of air which is introduced into a vehicle room through the air vent 30 can be controlled by the working member 20 which rotates with respect to the hinge groove 25 axially coupled to the air vent 30 while the outside end portion of the blocking pad 10 is attached to or detached from the blocking step 31a of the blocking protrusion 31 provided to the air vent 30.

Therefore, in order to block the air which is introduced into the vehicle room through the air vent 30, the working member 20 rotates with respect to the hinge groove 25 such that the outside end portion of the blocking pad 10 is fitted into the blocking step 31a of the blocking protrusion 31 provided to the air vent 30.

Meanwhile, in order to introduce air into the vehicle room through the air vent 30, the working member 20 rotates with respect to the hinge groove 25 such that the outside end portion of the blocking pad 10 separates from the blocking step 31a of the blocking protrusion 31 provided to the air vent 30.

The embodiments described above are to be understood as a few illustrative examples of the present invention. It will be understood by those skilled in the art that various modifications, combinations and changes may be made to the embodiments without departing from the scope of the present invention.

### Brief Explanation of Reference Symbols

10 - Blocking pad 11 - Coupling holes
12 - Fitting hole 20 - Working member
22 - Coupling groove 23 - Fixing part
23a - Fitting groove 24 - Base part
24a - Coupling hook 25 - Hinge groove
30 - Air vent 31 - Blocking protrusion
31a - Blocking step

## Claims

1. A vehicle air vent damper, in which a blocking pad (10) forcedly fitted into an outer peripheral coupling groove (22) of a working member (20), which is rotationally hinge-coupled to inside an air vent (30), is held by a blocking step (31a) of a blocking protrusion (31) provided inside the air vent (30), at an end thereof such that a rotation of the working member (20) with the blocking pad (10) is controlled so as to control a discharge amount of air introduced into a vehicle room through the air vent (30),
wherein the working member (20) has the coupling groove (22) formed along an outer peripheral surface thereof, and a base part (24) formed to have a fixing part (23) short on one surface of a coupling groove (22) while the fixing part (23) extends long on another surface of the coupling groove (22) such that a right side and a left side with reference to a hinge groove (25) are opposite to each other; and
the blocking pad (10) has a coupling hole (11) formed in a middle thereof so as to be forcedly fitted into the coupling groove (22) of the working member (20),
said vehicle air vent damper being **characterized in that** the working member (20) further includes fitting grooves (23a) depressed inward on right and left ends of the fixing part (23), and the base part (24) is formed to further have coupling hooks (24a) to be exposed through the fitting grooves (23a),
the blocking pad (10) further includes fitting holes (12) formed at right and left sides thereof so as to be fitted into the coupling hooks (24a),
the fitting grooves (23a) and the coupling hooks (24a) formed at the right and left sides of the working member (20) are arranged at different horizontal positions on the right and left sides of the working member (20),
the coupling hooks (24a) are formed to have vertical surfaces on the insides thereof and to protrude to outsides with an inclination, and
the working member (20) and the blocking pad (10) include the two coupling hooks (24a) and the two fitting holes (12) at one side, and one coupling hook (24a) and one fitting hole (12) at the other side so as to prevent the misassembling of the blocking pad (10).

## Patentansprüche

1. Lüftungsklappendämpfer für ein Fahrzeug, in dem ein Blockierkissen (10), das in eine äußere umlaufende Kopplungsnut (22) eines Funktionsbauteils (20) hineingepresst ist, das drehbar an der Innenseite einer Belüftungsklappe (30) angelenkt ist, durch eine Blockierstufe (31a) eines innerhalb der Belüftungsklappe (30) bereitgestellten Blockiervorsprungs (31) an einem Ende gehalten wird, derart, dass eine Drehung des Funktionsbauteils (20) mit dem Blockierkissen (10) gesteuert wird, um die durch die Belüftungsklappe (30) in einen Fahrzeugraum eingeleitete Luftmenge zu steuern,
wobei das Funktionsbauteil (20) die Kopplungsnut (22) aufweist, die entlang seiner äußeren Umfangsfläche ausgebildet ist, und ein Basisteil (24), das so ausgebildet ist, dass es ein Befestigungsteil (23) aufweist, das auf einer Oberfläche einer Kopplungsnut (22) kurz ausgebildet ist, während sich das Befestigungsteil (23) auf einer anderen Oberfläche der Kopplungsnut (22) lang erstreckt, derart dass eine rechte Seite und eine linke Seite in Bezug auf eine Scharniernut (25) einander gegenüberliegen; und
das Blockierkissen (10) ein in dessen Mitte ausgebildetes Kopplungsloch (11) aufweist, um in die Kopplungsnut (22) des Funktionsbauteils (20) hineingepresst zu werden, wobei der Fahrzeug-Lüftungsklappendämpfer **dadurch gekennzeichnet ist, dass** das Funktionsbauteil (20) ferner Passnuten (23a) umfasst, die an den rechten und linken Enden des Befestigungsteils (23) nach innen gedrückt werden, und das Basisteil (24) so ausgebildet ist, dass es weiterhin Kopplungshaken (24a) aufweist, die durch die Passnuten (23a) hindurch freigelegt sind,
das Blockierkissen (10) ferner Passlöcher (12) einschließt, die rechts und links am Blockierkissen (10) ausgebildet sind, um in die Kopplungshaken (24a) eingesetzt zu werden,
wobei die Passnuten (23a) und die Kopplungshaken (24a), die rechts und links des Funktionsbauteils (20) ausgebildet sind, in unterschiedlichen horizontalen Positionen auf der rechten und linken Seite des Funktionsbauteils (20) angeordnet sind,
die Kopplungshaken (24a) so ausgebildet sind, dass sie vertikale Flächen an ihren Innenseiten aufweisen und nach außen geneigt vorstehen, und
das Funktionsbauteil (20) und das Blockierkissen (10) die zwei Kopplungshaken (24a) und die zwei Befestigungslöcher (12) auf der einen Seite und einen Kopplungshaken (24a) und ein Befestigungsloch (12) auf der anderen Seite aufweisen, um eine Falschmontage des Blockierkissens (10) zu verhindern.

## Revendications

1. Volet d'obturation d'évacuation d'air de véhicule dans lequel un tampon de blocage (10) inséré en force dans une rainure de couplage (22) périphérique externe d'un élément de travail (20), qui est accouplé par articulation de façon rotative à l'intérieur d'une évacuation d'air (30), est retenu par un pas de blocage (31a) d'une partie saillante de blocage (31) ménagée dans l'évacuation d'air (30), à une extrémité de ce dernier de telle sorte qu'une rotation de l'élément de travail (20) avec le tampon de blocage (10) est commandée de manière à commander une quantité d'évacuation d'air introduit dans un espace de véhicule à travers l'évacuation d'air (30),
en ce que l'élément de travail (20) a la rainure de couplage (22) formée le long d'une surface périphérique externe de ce dernier, et une partie de base (24) formée de façon à avoir une partie de fixation (23) courte sur une surface d'une rainure de couplage (22) tandis que la partie de fixation (23) s'étend le long d'une autre surface de la rainure de couplage (22) de telle sorte qu'un côté droit et un côté gauche par rapport à une rainure d'articulation (25) sont mutuellement opposés ; et
le tampon de blocage (10) a un trou de couplage (11) formé dans le centre de ce dernier de façon à être inséré en force dans la rainure de couplage (22) de l'élément de travail (20),
ledit volet d'obturation d'évacuation d'air de véhicule **caractérisé en ce que** l'élément de travail (20) comporte en outre des rainures d'ajustage (23a) enfoncées vers l'intérieur sur les extrémités droite et gauche de la partie de fixation (23), et la partie de base (24) est formée de façon à avoir en outre des crochets de couplage (24a) destinés à être exposés à travers les rainures d'ajustage (23a),
le tampon de blocage (10) comporte en outre des trous d'ajustage (12) formés sur les côtés droit et gauche de ce dernier de façon à être ajustés dans les crochets de couplage (24a),
les rainures d'ajustage (23a) et les crochets de couplage (24a) formés sur les côtés droit et gauche de l'élément de travail (20) sont disposés à différentes positions horizontales sur les côtés droit et gauche de l'élément de travail (20),
les crochets de couplage (24a) sont formés de façon à avoir des surfaces verticales à l'intérieur de ces derniers et de façon à faire saillie vers l'extérieur avec une inclinaison, et
l'élément de travail (20) et le tampon de blocage (10) comportent les deux crochets de couplage (24a) et les deux trous d'ajustage (12) d'un côté, et un crochet de couplage (24a) et un trou d'ajustage (12) de l'autre côté de façon à empêcher le mauvais assemblage du tampon de blocage (10).
